# EUROPEAN PATENT APPLICATION

(11) **EP 3 778 766 A1**
(43) Date of publication of application: **17.02.2021**
(21) Application number: 19776458.2
(22) Date of filing: 14.03.2019
(51) Int. Cl.: C08L 51/04, C08L 25/12

(54) **THERMOPLASTIC RESIN COMPOSITION AND MOLDED ARTICLE THEREOF**

(30) Priority: 29.03.2018 JP 2018063723
(71) Applicant: Techno-UMG Co., Ltd., Tokyo 105-0021 (JP)
(72) Inventor: KAMATA, Ichiro, Ube-shi, Yamaguchi 755-8580 (JP)
(74) Representative: Lavoix
(86) International application number: PCT/JP2019/010566
(87) International publication number: WO 2019/188347

(57) **Abstract**

A thermoplastic resin composition of the present invention comprises: a graft copolymer (A) obtained by polymerizing a vinyl-based monomer mixture (m1) composed of one or more types of vinyl-based monomers, in the presence of a rubber-like polymer (a) having a volume average particle size of 80 to 250 nm; and a vinyl-based copolymer (B) composed of 31 to 50% by mass of a vinyl cyanide-based monomer unit, 50 to 69% by mass of an aromatic vinyl-based monomer unit, and 0 to 30% by mass of another vinyl-based monomer unit, wherein proportions of the graft copolymer (A) and the vinyl-based copolymer (B) are 30 to 70% by mass and 30 to 70% by mass, respectively, with respect to a total of 100% by mass of the graft copolymer (A) and the vinyl-based copolymer (B).

## Description

### [Technical Field]

The present invention relates to a thermoplastic resin composition and a molded article thereof.

Priority is claimed on Japanese Patent Application No. 2018-063723, filed March 29, 2018, the content of which is incorporated herein by reference.

### [Background Art]

By improving the impact resistance of molded articles, for example, the potential applications for such molded articles expand, thereby increasing the industrial usefulness. Therefore, various methods have been proposed so far for improving the impact resistance of molded articles. Among these methods, a method of increasing the impact resistance of molded articles by using a resin material obtained by combining a rubber-like polymer and a hard resin while maintaining the characteristics derived from the hard resin has already been used in industrial settings. Examples of such resin materials include acrylonitrile-butadiene-styrene (ABS) resins, acrylonitrile-styrene-(meth)acrylate (ASA) resins, acrylonitrile-ethylene / α-olefin-styrene (AES) resins, silicone-acrylic composite rubber-acrylonitrile-styrene (SAS) resins, and thermoplastic resin compositions obtained by further adding these resins to hard resins.

In Patent Document 1, a resin composition containing a matrix of a styrene-acrylic copolymer obtained by copolymerizing a predetermined monomer mixture and butadiene rubber particles dispersed in the matrix has been proposed, wherein the particle size and dispersion coefficient of the rubber particles satisfy a predetermined formula. In the above resin composition, among the entire rubber particles, the rubber particles having a particle size of 0.12 µm or smaller account for a fraction of 0.1 to 0.85, the rubber particles having a particle size of greater than 0.12 µm and smaller than 0.5 µm account for 0.05 to 0.85, and the rubber particles having a particle size of 0.5 µm or greater account for a fraction of 0.01 to 0.2.

### [Citation List]

### [Patent Document]

[Patent Document 1] Japanese Unexamined Patent Application, First Publication No. Hei 11-217411

### [Summary of Invention]

### [Technical Problem]

However, the resin composition described in Patent Document 1 did not fully satisfy all of the fluidity and the impact resistance in a low temperature environment and the color developability of the obtained molded article.

The present invention provides a thermoplastic resin composition having excellent fluidity and capable of obtaining a molded article excellent in impact resistance in a low temperature environment and color developability. Further, the present invention provides a molded article excellent in impact resistance in a low temperature environment and color developability.

### [Solution to Problem]

The present invention includes the following aspects.
[1] A thermoplastic resin composition comprising: a graft copolymer (A) obtained by polymerizing a vinyl-based monomer mixture (m1) composed of one or more types of vinyl-based monomers, in the presence of a rubber-like polymer (a) having a volume average particle size of 80 to 250 nm; and a vinyl-based copolymer (B) composed of 31 to 50% by mass of a vinyl cyanide-based monomer unit, 50 to 69% by mass of an aromatic vinyl-based monomer unit, and 0 to 30% by mass of another vinyl-based monomer unit,
   wherein proportions of the graft copolymer (A) and the vinyl-based copolymer (B) are 30 to 70% by mass and 30 to 70% by mass, respectively, with respect to a total of 100% by mass of the graft copolymer (A) and the vinyl-based copolymer (B).
[2] The thermoplastic resin composition according to the above [1], wherein the vinyl-based copolymer (B) is composed of 31 to 43% by mass of the vinyl cyanide-based monomer unit, 57 to 69% by mass of the aromatic vinyl-based monomer unit, and 0 to 30% by mass of the another vinyl-based monomer unit.
[3] The thermoplastic resin composition according to the above [1] or [2], wherein the vinyl-based copolymer (B) has a weight average molecular weight of 80,000 to 120,000.
[4] The thermoplastic resin composition according to any one of the above [1] to [3], wherein a proportion of all rubber-like polymer components contained in the thermoplastic resin composition with respect to a total mass of the thermoplastic resin composition is from 15 to 35% by mass.
[5] A molded article using the thermoplastic resin composition according to any one of the above [1] to [4].

### [Advantageous Effects of Invention]

The thermoplastic resin composition of the present invention exhibits excellent fluidity. Further, according to the thermoplastic resin composition of the present invention, it is possible to obtain a molded article having excellent impact resistance in a low temperature environment and excellent color developability.

The molded article of the present invention has excellent impact resistance in a low temperature environment and excellent color developability.

### [Description of Embodiments]

Definitions of the following terms apply throughout the present specification and claims.

"Volume average particle size" is a value obtained from the volume-based particle size distribution measured using a dynamic light scattering particle size distribution measuring device.

A "molded article" is one obtained by molding a thermoplastic resin composition.

A "(meth)acrylate" means an acrylate or a methacrylate.

A symbol "-" indicating a numerical range means that numerical values described before and after that are included as the lower limit value and the upper limit value.

### [Thermoplastic resin composition]

A thermoplastic resin composition of the present invention contains a graft copolymer (A) and a vinyl-based copolymer (B). The graft copolymer (A) is obtained by polymerizing a vinyl-based monomer mixture (m1) in the presence of a rubber-like polymer (a).

The thermoplastic resin composition of the present invention may contain a thermoplastic resin other than the graft copolymer (A) and the vinyl-based copolymer (B), if necessary, within a range that does not impair the effects of the present invention.

The thermoplastic resin composition of the present invention may contain components other than the thermoplastic resin, if necessary, within a range that does not impair the effects of the present invention.

Hereinafter, each component will be described.

### <Rubber-like polymer (a)>

The rubber-like polymer (a) is not particularly limited, and examples thereof include a conjugated diene-based rubber-like polymer (a butadiene-based rubber-like polymer (polybutadiene, a styrene-butadiene copolymer, an acrylonitrile-butadiene copolymer, an acrylate-butadiene copolymer, and the like), isoprene rubber, chloroprene rubber, a styrene / isoprene copolymer, and the like), an acrylic rubber-like polymer (polybutyl acrylate, and the like), an olefin-based rubber-like polymer (an ethylene-propylene copolymer, and the like), a silicone-based rubber-like polymer (polyorganosiloxane and the like), natural rubber, butyl rubber, urethane rubber, chlorinated polyethylene, epichlorohydrin rubber, fluororubber, and polysulfide rubber. One type of these rubber-like polymers may be used alone, or two or more types thereof may be used in combination. The rubber-like polymer (a) may have a composite rubber structure or a core-shell structure.

As the rubber-like polymer (a), an acrylic rubber-like polymer, an olefin-based rubber-like polymer, a silicone-based rubber-like polymer, or a silicone-acrylic composite rubber-like polymer is preferred because the molded article has excellent weather resistance.

The rubber-like polymer (a) is in a granular form and is present in a granular form even in the thermoplastic resin composition.

The rubber-like polymer (a) has a volume average particle size of 80 to 250 nm. When the volume average particle size of the rubber-like polymer (a) is equal to or more than the above lower limit value, the impact resistance of the molded article is improved, and when it is equal to or less than the above upper limit value, the color developability of the molded article is improved. The volume average particle size of the rubber-like polymer (a) is preferably from 90 to 150 nm.

The method for producing the rubber-like polymer (a) is not particularly limited. For example, a rubber-like polymer can be obtained by polymerizing a monomer component (butadiene, a (meth)acrylate, and the like) constituting the rubber-like polymer. As a method for producing a rubber-like polymer having a composite rubber structure, for example, a method of heteroaggregating or co-enlarging an aqueous dispersion of one rubber-like polymer and an aqueous dispersion of the other rubber-like polymer; a method of polymerizing, in the presence of an aqueous dispersion of one rubber-like polymer, a monomer component constituting the other rubber-like polymer to form a composite, and the like can be mentioned. For example, a silicone-acrylic composite rubber-like polymer can be obtained by emulsion polymerization of a monomer component containing a (meth)acrylate in the presence of a silicone-based rubber-like polymer.

### <Vinyl-based monomer mixture (ml)>

The vinyl-based monomer mixture (m1) is composed of one or more types of vinyl-based monomers.

Examples of the vinyl-based monomers include aromatic vinyl-based monomers, vinyl cyanide-based monomers, and another vinyl-based monomers.

The vinyl-based monomer mixture (m1) preferably contains an aromatic vinyl-based monomer and a vinyl cyanide-based monomer from the viewpoint of further improving the impact resistance of the molded article and the fluidity.

Examples of the aromatic vinyl-based monomer include styrene, α-methylstyrene and p-methylstyrene.

Examples of the vinyl cyanide-based monomer include acrylonitrile and methacrylonitrile.

Examples of another vinyl-based monomers include unsaturated carboxylic acid-based monomers, unsaturated carboxylic acid anhydride-based monomers, unsaturated carboxylic acid ester-based monomers and maleimide-based monomers. Specific examples of another monomers include (meth)acrylic acid, maleic anhydride, methyl (meth)acrylate, ethyl (meth)acrylate, n-propyl (meth)acrylate, n-butyl (meth)acrylate, t-butyl (meth)acrylate, n-hexyl (meth)acrylate, chloromethyl (meth)acrylate, N-methylmaleimide, N-ethylmaleimide, N-cyclohexylmaleimide and N-phenylmaleimide.

Any one of these vinyl-based monomers may be used alone, or two or more types thereof may be used in combination.

The vinyl-based monomer mixture (m1) is more preferably composed of 60 to 80% by mass of the aromatic vinyl-based monomer, 20 to 40% by mass of the vinyl cyanide-based monomer and 0 to 30% by mass of another vinyl-based monomer copolymerizable with these monomers, and is still more preferably composed of 64 to 76% by mass of the aromatic vinyl-based monomer, 24 to 36% by mass of the vinyl cyanide-based monomer and 0 to 15% by mass of another vinyl-based monomer copolymerizable with these monomers, from the viewpoint of further improving the impact resistance of the molded article and the fluidity.

The content (% by mass) of each monomer is a ratio with respect to the total mass of the vinyl-based monomer mixture (m1), that is, the total mass of all monomers. When another vinyl-based monomer is 0% by mass, it means that another vinyl-based monomers are not included. The same applies to the vinyl-based monomer mixture (m2) to be described later.

### <Graft copolymer (A)>

The graft copolymer (A) is obtained by polymerizing the vinyl-based monomer mixture (m1) in the presence of the rubber-like polymer (a).

It should be noted that in the graft copolymer (A), it is difficult to specify how the vinyl-based monomer mixture (m1) is polymerized in the presence of the rubber-like polymer (a). For example, as the vinyl-based polymer obtained by polymerizing the vinyl-based monomer mixture (ml), there may be those that are bonded to the rubber-like polymer (a) and those that are not bonded to the rubber-like polymer (a). Further, it is also difficult to specify the molecular weight of the vinyl-based polymer bonded to the rubber-like polymer (a), the ratio of structural units, and the like. That is, there is a circumstance (impossible / impractical circumstance) in which it is impossible or almost impractical to directly specify the graft copolymer (A) by its structure or characteristics. Therefore, in the present invention, it is more appropriate to specify that the graft copolymer (A) is "obtained by polymerizing the vinyl-based monomer mixture (m1) in the presence of the rubber-like polymer (a)".

The rubber content of the graft copolymer (A), that is, the mass ratio of the rubber-like polymer (a) with respect to the total mass of the graft copolymer (A) is preferably from 20 to 80% by mass, and more preferably from 30 to 70% by mass. When the rubber content is equal to or more than the above lower limit value, the impact resistance of the molded article and the fluidity are further improved. When the rubber content is equal to or less than the above upper limit value, the color developability is further improved.

The graft copolymer (A) is produced by polymerizing the vinyl-based monomer mixture (m1) in the presence of the rubber-like polymer (a).

As a polymerization method, an emulsion polymerization method is preferable since a reaction can be controlled to proceed stably. More specifically, a method in which the vinyl-based monomer mixture (m1) is charged into the rubber-like polymer (a) all at once and then polymerized; a method in which a part of the vinyl-based monomer mixture (m1) is charged into the rubber-like polymer (a) in advance and the rest is added dropwise into the polymerization system while being polymerized as needed; and a method in which the polymerization is carried out as needed while adding dropwise the entire amount of the vinyl-based monomer mixture (m1) to the rubber-like polymer (a), and the like can be mentioned.

The polymerization conditions are not particularly limited, and, for example, polymerization conditions of 60 to 80°C for 1 to 3 hours can be mentioned.

The polymerization of the vinyl-based monomer mixture (m1) may be carried out in a single stage or may be carried out in two or more separate stages. When it is carried out in two or more separate stages, it is also possible to carry out by changing the type and composition ratio of the vinyl-based monomer mixture (m1) in each stage.

In the emulsion polymerization method, a radical polymerization initiator and an emulsifier are usually used. Further, a chain transfer agent may be used in combination in order to control the molecular weight and the graft ratio of the graft copolymer (A).

Examples of the radical polymerization initiators include peroxides, azo-based initiators, and redox type initiators that combine an oxidizing agent and a reducing agent. As the radical polymerization initiator, a redox type initiator is preferable, and a sulfoxylate type initiator in which ferrous sulfate, disodium ethylenediaminetetraacetate, sodium formaldehyde sulfoxylate and hydroperoxide are combined is more preferable.

The emulsifier is preferably a carboxylic acid salt such as sodium sarcosinate, potassium fatty acids, sodium fatty acids, dipotassium alkenyl succinate, and rosin acid soaps since the stability of the latex at the time of radical polymerization is excellent and the polymerization rate can be increased, and dipotassium alkenyl succinate is more preferred since the generation of gas can be suppressed when the graft copolymer (A) and the thermoplastic resin composition including the same are molded at a high temperature.

The graft copolymer (A) is usually obtained in a latex state.

Examples of a method for recovering the graft copolymer (A) from the latex of the graft copolymer (A) include: a wet method in which the latex of the graft copolymer (A) is placed into hot water in which a coagulant is dissolved, thereby being coagulated into a slurry form; and a spray drying method in which the graft copolymer (A) is semi-directly recovered by spraying the latex of the graft copolymer (A) in a heated atmosphere.

Examples of the coagulant used in the wet method include inorganic acids (such as sulfuric acid, hydrochloric acid, phosphoric acid and nitric acid), and metal salts (such as calcium chloride, calcium acetate and aluminum sulfate), which are selected depending on the emulsifier used in the polymerization. For example, when only a carboxylate soap such as a fatty acid soap or a rosin acid soap is used as the emulsifier, one or more of the above-mentioned coagulants can be used. Further, when an emulsifier exhibiting stable emulsifying power even in an acidic region such as sodium alkylbenzene sulfonate is used as the emulsifier, the metal salt is suitable as the coagulant.

The graft copolymer (A) in a slurry form is obtained by the wet method. As a method for obtaining the graft copolymer (A) in a dry state from the graft copolymer (A) in the form of a slurry, a method in which the slurry of the graft copolymer (A) is washed in order to elute the remaining emulsifier residue into water, dehydrated using a centrifuge, a press dehydrator or the like, and then dried using a flash dryer or the like; and a method in which the slurry of the graft copolymer (A) is dehydrated and dried simultaneously using a compression dehydrator, an extruder or the like can be mentioned. By these methods, the graft copolymer (A) in the form of a powder or particulate can be obtained.

The washing conditions are preferably such that the amount of the emulsifier residue contained in the graft copolymer (A) after drying is in the range of 0.5 to 2% by mass with respect to the total mass of the graft copolymer (A). When the emulsifier residue in the graft copolymer (A) is 0.5% by mass or more, the fluidity of the graft copolymer (A) and the thermoplastic resin composition containing the same tends to be further improved. When the emulsifier residue in the graft copolymer (A) is 2% by mass or less, generation of gas can be suppressed when the thermoplastic resin composition is molded at a high temperature.

The drying temperature may be, for example, from 50 to 80°C.

It should be noted that the graft copolymer (A) discharged from a compression dehydrator or extruder may be directly sent to an extruder or a molding machine for producing a thermoplastic resin composition to obtain a molded article, without recovering the graft copolymer (A).

### <Vinyl-based copolymer (B)>

The vinyl-based copolymer (B) contains a vinyl cyanide-based monomer unit and an aromatic vinyl-based monomer unit, and may further contain another vinyl-based monomer units, if necessary.

Examples of the vinyl cyanide-based monomers, aromatic vinyl-based monomers, and another vinyl-based monomers include the same as those described above, respectively. Any one of these vinyl-based monomers may be used alone, or two or more types thereof may be used in combination.

The vinyl-based copolymer (B) is composed of 31 to 50% by mass of the vinyl cyanide-based monomer unit, 50 to 69% by mass of the aromatic vinyl-based monomer unit, and 0 to 30% by mass of another vinyl-based monomer unit, is preferably composed of 31 to 43% by mass of the vinyl cyanide-based monomer unit, 57 to 69% by mass of the aromatic vinyl-based monomer unit, and 0 to 30% by mass of another vinyl-based monomer unit, and is more preferably composed of 33 to 43% by mass of the vinyl cyanide-based monomer unit, 57 to 67% by mass of the aromatic vinyl-based monomer unit, and 0 to 30% by mass of another vinyl-based monomer unit. The content (% by mass) of each monomer unit is a ratio with respect to a total of 100% by mass of all the monomer units in the vinyl-based copolymer (B). When the content of the vinyl cyanide-based monomer unit is equal to or more than the above lower limit value and the contents of the aromatic vinyl-based monomer unit and another vinyl-based monomer unit are equal to or less than the above upper limit value, when combined with the graft copolymer (A), the molded article has excellent impact resistance in a low temperature environment. When the content of the vinyl cyanide-based monomer unit is equal to or less than the above upper limit value and the content of the aromatic vinyl-based monomer unit is equal to or more than the above lower limit value, the fluidity is improved.

The weight average molecular weight (Mw) of the vinyl-based copolymer (B) is preferably from 60,000 to 140,000, more preferably from 80,000 to 120,000, and still more preferably from 85,000 to 110,000. When the Mw is equal to or more than the above lower limit value, the impact resistance of the molded article is further improved. When the Mw is equal to or less than the above upper limit value, the fluidity of the thermoplastic resin composition is further improved.

The Mw of the vinyl-based copolymer (B) is a value referenced against polystyrene standards which was measured by gel permeation chromatography (GPC).

The vinyl-based copolymer (B) can be produced by polymerizing a vinyl-based monomer mixture (m2) composed of 31 to 50% by mass of a vinyl cyanide-based monomer, 50 to 69% by mass of an aromatic vinyl-based monomer, and 0 to 30% by mass of another vinyl-based monomer.

The vinyl-based monomer mixture (m2) is preferably composed of 31 to 43% by mass of the vinyl cyanide-based monomer, 57 to 69% by mass of the aromatic vinyl-based monomer, and 0 to 30% by mass of another vinyl-based monomer, and is more preferably composed of 33 to 43% by mass of the vinyl cyanide-based monomer, 57 to 67% by mass of the aromatic vinyl-based monomer, and 0 to 30% by mass of another vinyl-based monomer.

It should be noted that the content (% by mass) of the vinyl cyanide-based monomer in the vinyl-based monomer mixture (m2) can be regarded as the content (% by mass) of the vinyl cyanide-based monomer unit with respect to a total of 100% by mass of all the monomer units in the vinyl-based copolymer (B). The same applies to the aromatic vinyl-based monomer and another vinyl-based monomer.

As the polymerization method, any known polymerization method such as emulsion polymerization, suspension polymerization, bulk polymerization or a combination of these methods can be employed.

The polymerization conditions are not particularly limited, and, for example, polymerization conditions of 60 to 100°C for 4 to 8 hours can be mentioned.

### <Other thermoplastic resins>

Examples of other thermoplastic resins include acrylonitrile-styrene copolymers (AS resins), styrene-maleic anhydride copolymers, acrylonitrile-styrene-N-substituted maleimide terpolymers, styrene-maleic anhydride-N-substituted maleimide terpolymers, acrylonitrile-butadiene-styrene copolymers (ABS resins) (excluding the graft copolymer (A)), acrylonitrile-styrene-alkyl (meth)acrylate copolymers (ASA resins) (excluding the graft copolymer (A)), acrylonitrile-ethylene-propylene-diene-styrene copolymers (AES resins) (excluding the graft copolymer (A)), polymethyl methacrylates, polycarbonate resins, polybutylene terephthalates (PBT resins), polyethylene terephthalates (PET resins), polyvinyl chlorides, polyolefins (such as polyethylenes and polypropylenes), styrene-based elastomers (such as styrene-butadiene-styrene (SBS), styrene-butadiene (SBR)), hydrogenated SBS and styrene-isoprene-styrene (SIS)), various olefin-based elastomers, various polyester-based elastomers, polystyrenes, methyl methacrylate-styrene copolymers (MS resins), acrylonitrile-styrene-methyl methacrylate copolymers, polyacetal resins, modified polyphenylene ethers (modified PPE resins), ethylene-vinyl acetate copolymers, polyphenylene sulfides (PPS resins), polyethersulfones (PES resins), polyether ether ketones (PEEK resins), polyarylates, liquid crystal polyester resins and polyamide resins (nylon). A single type of other thermoplastic resin may be used alone, or two or more types thereof may be used in combination.

### <Other components>

Examples of other components include additives and the like.

Examples of the additives include various stabilizers (such as antioxidants and light stabilizers), lubricants, plasticizers, mold release agents, dyes, pigments, antistatic agents, flame retardants, metal powders and inorganic fillers. One type of the additives may be used alone, or two or more types thereof may be used in combination.

In the thermoplastic resin composition of the present invention, the proportion of the graft copolymer (A) is from 30 to 70% by mass and the proportion of the vinyl-based copolymer (B) is from 30 to 70% by mass with respect to a total of 100% by mass of the graft copolymer (A) and the vinyl-based copolymer (B), and it is preferable that the proportion of the graft copolymer (A) is from 35 to 65% by mass and the proportion of the vinyl-based copolymer (B) is from 35 to 65%, and it is more preferable that the proportion of the graft copolymer (A) is from 40 to 60% by mass and the proportion of the vinyl-based copolymer (B) is from 40 to 60% by mass.

That is, the mass ratio represented by the formula: (graft copolymer (A) / vinyl-based copolymer (B)) (hereinafter, also referred to as "(A) / (B) ratio") is from 30/70 to 70/30, preferably from 35/65 to 65/35, and more preferably from 40/60 to 60/40.

When the proportion of the graft copolymer (A) is equal to or more than the lower limit value of the above range (when the proportion of the vinyl-based copolymer (B) is equal to or less than the upper limit value of the above range), the impact resistance of the molded article is improved. When the proportion of the graft copolymer (A) is equal to or less than the upper limit value of the above range (when the proportion of the vinyl-based copolymer (B) is equal to or more than the lower limit value of the above range), the fluidity of the thermoplastic resin composition is improved.

The total content of the graft copolymer (A) and the vinyl-based copolymer (B) is preferably from 80 to 100% by mass, and more preferably from 90 to 100% by mass, with respect to the total mass of the thermoplastic resin composition.

The proportion of all rubber-like polymer components contained in the thermoplastic resin composition of the present invention is preferably from 15 to 35% by mass, and more preferably from 20 to 30% by mass, with respect to the total mass of the thermoplastic resin composition. The expression "all rubber-like polymer components" refers to the total of the rubber-like polymer components derived from the rubber-like polymer (a) and any other thermoplastic resins. When the proportion of all rubber-like polymer components is equal to or more than the above lower limit value, the impact resistance of the molded article in a low temperature environment is improved.

### <Method for producing thermoplastic resin composition>

The thermoplastic resin composition of the present invention can be produced by mixing and dispersing the graft copolymer (A), the vinyl-based copolymer (B), other thermoplastic resins as necessary, and other components as necessary with a V-type blender, a Henschel mixer or the like, and melt-kneading the resulting mixture using a mixing kneader such as a screw type extruder, a Banbury mixer, a pressure kneader, and a mixing roll. Further, if necessary, the melt-kneaded product may be pelletized by using a pelletizer or the like. The melt-kneading temperature may be, for example, from 200 to 300°C.

The thermoplastic resin composition of the present invention described above exhibits excellent fluidity because it contains the graft copolymer (A) and the vinyl-based copolymer (B). Further, it is possible to obtain a molded article which is excellent in impact resistance in a low temperature environment (for example, from -30 to -10°C) and color developability.

### [Molded article]

The molded article of the present invention uses the thermoplastic resin composition of the present invention. More specifically, it is obtained by molding the thermoplastic resin composition of the present invention and contains the thermoplastic resin composition of the present invention.

The molded article of the present invention can be obtained by molding the thermoplastic resin composition of the present invention.

The molding method may be a known molding method, and examples thereof include an injection molding method, a press molding method, an extrusion molding method, a vacuum molding method, and a blow molding method.

Examples of applications of the molded article of the present invention include automotive exterior parts, automotive interior parts, office automation (OA) equipment and home appliance parts, and automotive exterior parts are suitable.

In the molded article of the present invention described above, since the thermoplastic resin composition of the present invention is used, the impact resistance in a low temperature environment and the color developability are excellent.

### [Examples]

Hereinafter, the present invention will be described more specifically with reference to examples. The present invention is not limited to these examples.

Hereinafter, the units "parts" and "%" refer to "parts by mass" and "% by mass", respectively.

### <Measurement and evaluation>

### (Volume average particle size)

Using a dynamic light scattering type particle size distribution measuring device (Nanotrac UPA-EX150, manufactured by Nikkiso Co., Ltd.), a volume-based particle size distribution of a polymer in a latex was measured by a dynamic light scattering method, and the volume average particle size was determined from the particle size distribution.

### (Weight average molecular weight of vinyl-based copolymer (B))

Using a solution obtained by dissolving a vinyl-based copolymer (B) in tetrahydrofuran as a measurement sample, a weight average molecular weight was measured by gel permeation chromatography (GPC) (manufactured by Tosoh Corporation) and calculated by a standard polystyrene conversion method.

### (Impact resistance)

A test piece (type A, notched) (molded article) was produced from a pelletized thermoplastic resin composition, using an injection molding machine (IS55FP-1.5A manufactured by Toshiba Machine Co., Ltd.) in accordance with ISO 3167. The Charpy impact strength of the test piece was measured in accordance with ISO 179 under an atmosphere of -20°C. The higher the Charpy impact strength, the better the impact resistance.

### (Color developability)

A plate-shaped test piece (molded article) having a length of 100 mm, a width of 100 mm and a thickness of 2 mm was produced from a pelletized thermoplastic resin composition under conditions of a cylinder set temperature of 260°C, a mold temperature of 60°C, and an injection rate of 20 g/sec, by using a 4-ounce injection molding machine (manufactured by The Japan Steel Works, Ltd.), and lightness (L* value) was measured by a colorimeter CM-508d (manufactured by Konica Minolta, Inc.). The smaller the L* value, the better the color developability.

### (Fluidity)

The melt volume flow rate (MVR) of the pelletized thermoplastic resin composition was measured using a melt indexer ("F-F01" manufactured by Toyo Seiki Seisaku-sho, Ltd.) in accordance with ISO 1133 at a cylinder temperature of 220°C and a load of 10 kg. The larger the MVR value, the better the fluidity.

### <Production Example 1: Production of graft copolymer (A-1)>

240 parts of ion-exchanged water (hereinafter, simply referred to as water), 0.7 parts of dipotassium alkenyl succinate (LATEMUL ASK, manufactured by Kao Corporation), 50 parts of n-butyl acrylate, 0.15 parts of allyl methacrylate, 0.05 parts of 1,3-butanediol dimethacrylate and 0.1 parts of t-butyl hydroperoxide were charged into a reactor with stirring, and following replacement of the air inside of the reactor with nitrogen, the temperature of the contents was raised. An aqueous solution composed of 0.2 parts of sodium formaldehyde sulfoxylate, 0.00015 parts of ferrous sulfate heptahydrate, 0.00045 parts of disodium ethylenediaminetetraacetate, and 10 parts of water was added thereto at an internal temperature of 55°C to initiate the polymerization. Following confirmation of heat generation from the polymerization, the jacket temperature was set to 75°C and the polymerization was continued until heat generated by the polymerization reaction could no longer be detected, and the state was further maintained for 1 hour to obtain a latex of an acrylic rubber-like polymer (a1) having a volume average particle size of 100 nm.

The internal temperature was continuously controlled at 70°C, and an aqueous solution composed of 0.2 parts of dipotassium alkenyl succinate (LATEMUL ASK, manufactured by Kao Corporation), 0.3 parts of sodium formaldehyde sulfoxylate, 0.001 parts of ferrous sulfate heptahydrate, 0.003 parts of disodium ethylenediaminetetraacetate and 10 parts of water was added. Then, the temperature was raised to 80°C while adding dropwise a mixed solution composed of 12 parts of acrylonitrile, 28 parts of styrene, and 0.2 parts of t-butyl hydroperoxide over 80 minutes. After completion of the dropwise addition, the resulting mixture was held at a temperature of 80°C for 30 minutes, and then cooled to 75°C, and a mixed solution composed of 3 parts of acrylonitrile, 7 parts of styrene, 0.02 parts of normal octyl mercaptan, and 0.05 parts of t-butyl hydroperoxide was added dropwise over 20 minutes. After completion of the dropwise addition, the resulting mixture was held at 75°C for 60 minutes and then cooled to obtain a graft copolymer (A-1) latex. Then, 100 parts of a 2.0% aqueous solution of sulfuric acid was heated to 40°C, 100 parts of the graft copolymer (A-1) latex was gradually added dropwise to the aqueous solution while stirring the aqueous solution to solidify the graft copolymer (A-1), and the temperature was further raised to 95°C and held for 10 minutes. Subsequently, the solidified product was dehydrated, washed and dried to obtain the graft copolymer (A-1) in the form of a powder.

### <Production Example 2: Production of graft copolymer (A-2)>

150 parts of water, 100 parts of 1,3-butadiene, 3.0 parts of a hardened fatty acid potassium soap, 0.3 parts of organic sodium sulfonate, 0.2 parts of tertiary dodecyl mercaptan, 0.3 parts of potassium persulfate having a 10-hour half-life temperature of 71°C and 0.14 parts of potassium hydroxide were charged into a pressure resistant container, and the temperature was raised to 60°C with stirring under a nitrogen atmosphere to initiate the polymerization. 5 parts of water in which 0.1 parts of potassium persulfate was dissolved was added to the pressure resistant container when the polymerization rate was 65% to raise the polymerization temperature to 70°C, and the polymerization was completed at a reaction time of 13 hours and a polymerization conversion rate of 90%. Then, 0.1 parts of sodium formaldehyde sulfoxylate was added to the pressure resistant container to obtain a butadiene-based rubber-like polymer having a volume average particle size of 80 nm. Subsequently, 1.25 parts of acetic acid was added thereto for enlargement, thereby obtaining a latex of a butadiene-based rubber-like polymer (a2) having a volume average particle size of 200 nm.

40 parts of the obtained latex of the butadiene-based rubber-like polymer (a2) in terms of solid content, 170 parts of water, 0.3 parts of disproportionated potassium rosinate, 0.01 parts of ferrous sulfate heptahydrate, 0.2 parts of sodium pyrophosphate and 0.5 parts of crystalline glucose were charged into a reactor. The was raised to 60°C while stirring the contents, and a mixture composed of 16 parts of acrylonitrile, 44 parts of styrene, 0.4 parts of cumene hydroperoxide, and 0.2 parts of t-dodecyl mercaptan was added dropwise over 100 minutes for polymerization. After completion of the dropwise addition, the temperature was raised to 75°C, and the resulting mixture was further stirred and held for 1 hour to complete the graft polymerization reaction. An antioxidant was added to the polymer obtained by the above reaction to obtain a latex of the graft copolymer (A-2). Subsequently, the obtained latex of the graft copolymer (A-2) was charged into a dilute aqueous solution of sulfuric acid having a liquid temperature of 80°C, and then heated to 90°C over 30 minutes for coagulation, followed by dehydration, washing and drying, thereby obtaining the graft copolymer (A-2) in the form of a powder.

### <Production Example 3: Production of graft copolymer (A-3)>

### Production of acid group-containing copolymer latex (K):

200 parts of water, 2 parts of potassium oleate, 4 parts of sodium dioctyl sulfosuccinate, 0.003 parts of ferrous sulfate heptahydrate, 0.009 parts of disodium ethylenediaminetetraacetate, and 0.3 parts of sodium formaldehyde sulfoxylate were charged into a reactor under a nitrogen atmosphere, and the temperature was raised to 60°C. From the point at which the temperature reached 60°C, a mixture composed of 82 parts of n-butyl acrylate, 18 parts of methacrylic acid and 0.5 parts of cumene hydroperoxide was added dropwise in a continuous manner over 120 minutes. After completion of the dropwise addition, aging was further carried out for 2 hours while maintaining the temperature at 60°C to obtain an acid group-containing copolymer latex (K) having a volume average particle size of 150 nm.

310 parts of water, 1 part of dipotassium alkenyl succinate (LATEMUL ASK, manufactured by Kao Corporation), 80 parts of n-butyl acrylate, 0.48 parts of allyl methacrylate, 0.42 parts of triallyl isocyanurate, and 0.2 parts of t-butyl hydroperoxide were charged into a reactor with stirring, and following replacement of the air inside of the reactor with nitrogen, the temperature of the contents was raised. An aqueous solution composed of 0.3 parts of sodium formaldehyde sulfoxylate, 0.0001 parts of ferrous sulfate heptahydrate, 0.0003 parts of disodium ethylenediaminetetraacetate, and 10 parts of water was added thereto at an internal temperature of 55°C to initiate the polymerization. Following confirmation of heat generation from the polymerization, the jacket temperature was set to 75°C and the polymerization was continued until heat generated by the polymerization reaction could no longer be detected, and the state was further maintained for 1 hour to obtain an acrylic rubber-like polymer having a volume average particle size of 100 nm. Then, 1 part of a 5% sodium pyrophosphate aqueous solution was added as a solid, and the jacket temperature was controlled so that the internal temperature was 70°C. 3 parts of the acid group-containing copolymer latex (K) was added thereto as a solid at an internal temperature of 70°C, and the resulting mixture was stirred for 30 minutes while maintaining the internal temperature of 70°C for enlargement to obtain an acrylic rubber-like polymer having a volume average particle size of 420 nm. Furthermore, an aqueous solution composed of 0.03 parts of sodium formaldehyde sulfoxylate, 0.002 parts of ferrous sulfate heptahydrate, 0.006 parts of disodium ethylenediaminetetraacetate, and 80 parts of water was added at an internal temperature of 70°C, and then a mixed solution composed of 20 parts of n-butyl acrylate, 0.12 parts of allyl methacrylate, 0.1 parts of triallyl isocyanurate and 0.02 parts of t-butyl hydroperoxide was added dropwise over 1 hour. After completion of the dropwise addition, the resulting mixture was held at a temperature of 70°C for 1 hour and then cooled to obtain a latex of an acrylic rubber-like polymer (a3) having a volume average particle size of 450 nm.

50 parts of the obtained latex of the acrylic rubber-like polymer (a3) in terms of solid content, 230 parts of water, 0.5 parts of dipotassium alkenyl succinate (LATEMUL ASK, manufactured by Kao Corporation), and 0.3 parts of sodium formaldehyde sulfoxylate were charged into a reactor, and following thorough replacement of the air inside of the reactor with nitrogen, the internal temperature was raised to 70°C with stirring. Subsequently, the temperature was raised to 80°C while adding dropwise a mixed solution composed of 15 parts of acrylonitrile, 35 parts of styrene and 0.5 parts of t-butyl hydroperoxide over 100 minutes. After completion of the dropwise addition, the resulting mixture was held at a temperature of 80°C for 30 minutes and then cooled to obtain a graft copolymer (A-3) latex. Subsequently, 100 parts of a 1.5% aqueous solution of sulfuric acid was heated to 80°C, and 100 parts of the graft copolymer (A-3) latex was gradually added dropwise to the aqueous solution while stirring the aqueous solution to solidify the graft copolymer (A-3), and the temperature was further raised to 95°C and held for 10 minutes. Then, the solidified product was dehydrated, washed and dried to obtain the graft copolymer (A-3) in the form of a powder.

The volume average particle sizes of the rubber-like polymers used for the graft copolymers (A-1) to (A-3), the types of rubber-like polymers, and the rubber contents and production methods of the graft copolymers (A-1) to (A-3) are listed in Table 1.

**[Table 1]**

| Graft copolymer | Volume average particle size of rubber-like polymer (nm) | Rubber-like polymer | Rubber content | Production method |
|---|---|---|---|---|
| (A-1) | 100 | Acrylic | 50% | Emulsion polymerization |
| (A-2) | 200 | Diene-based | 40% | Emulsion polymerization |
| (A-3) | 450 | Acrylic | 50% | Emulsion polymerization |

### <Production Example 4: Production of vinyl-based copolymer (B-1)>

34 parts of acrylonitrile and 66 parts of styrene were polymerized by a known suspension polymerization method to obtain an acrylonitrile-styrene copolymer having a reduced viscosity of 0.62 dl/g as measured at 25°C from an N,N-dimethylformamide solution. This copolymer was used as a vinyl-based copolymer (B-1).

### <Production Example 5: Production of vinyl-based copolymer (B-2)>:

35 parts of acrylonitrile and 65 parts of styrene were polymerized by a known suspension polymerization method to obtain an acrylonitrile-styrene copolymer having a reduced viscosity of 0.78 dl/g as measured at 25°C from an N,N-dimethylformamide solution. This copolymer was used as a vinyl-based copolymer (B-2).

### <Production Example 6: Production of vinyl-based copolymer (B-3)>:

42 parts of acrylonitrile and 58 parts of styrene were polymerized by a known suspension polymerization method to obtain an acrylonitrile-styrene copolymer having a reduced viscosity of 0.49 dl/g as measured at 25°C from an N,N-dimethylformamide solution. This copolymer was used as a vinyl-based copolymer (B-3).

### <Production Example 7: Production of vinyl-based copolymer (B-4)>:

47 parts of acrylonitrile and 53 parts of styrene were polymerized by a known suspension polymerization method to obtain an acrylonitrile-styrene copolymer having a reduced viscosity of 0.71 dl/g as measured at 25°C from an N,N-dimethylformamide solution. This copolymer was used as a vinyl-based copolymer (B-4).

### <Production Example 8: Production of vinyl-based copolymer (B-5)>:

27 parts of acrylonitrile and 73 parts of styrene were polymerized by a known suspension polymerization method to obtain an acrylonitrile-styrene copolymer having a reduced viscosity of 0.62 dl/g as measured at 25°C from an N,N-dimethylformamide solution. This copolymer was used as a vinyl-based copolymer (B-5).

The vinyl cyanide-based monomer ratios (%), weight average molecular weights (Mw) and production methods of the vinyl-based copolymers (B-1) to (B-5) are listed in Table 2. The vinyl cyanide-based monomer ratio is a ratio of the vinyl cyanide-based monomer with respect to the total of all vinyl-based monomers.

**[Table 2]**

| Vinyl-based copolymer | Vinyl cyanide-based monomer ratio (%) | Weight average molecular weight | Production method |
|---|---|---|---|
| (B-1) | 34 | 90,000 | Suspension polymerization |
| (B-2) | 35 | 150,000 | Suspension polymerization |
| (B-3) | 42 | 55,000 | Suspension polymerization |
| (B-4) | 47 | 115,000 | Suspension polymerization |
| (B-5) | 27 | 110,000 | Suspension polymerization |

### <Production of thermoplastic resin compositions and molded articles>

### (Examples 1 to 5, Comparative Examples 1 to 3)

The graft copolymer (A) and the vinyl-based copolymer (B) in amounts (parts) shown in Table 3, and 0.5 parts of ethylenebisstearylamide "ALFLOW H50S", 1 part of an antioxidant "ADK STAB AO-50" (manufactured by ADEKA Corporation), 1 part of a light stabilizer "ADK STAB LA-77Y" (manufactured by ADEKA Corporation), 0.5 parts of an ultraviolet absorber "ADK STAB LA-31" (manufactured by ADEKA Corporation), 0.1 parts of magnesium oxide "KYOWAMAG 150" (manufactured by Kyowa Chemical Industry Co., Ltd.) and 1 part of carbon black "#966B" (manufactured by Mitsubishi Chemical Corporation) were mixed using a Henschel mixer. The obtained mixture was melt-kneaded at 250°C using a screw type extruder (TEX-30α type twin screw extruder manufactured by The Japan Steel Works, Ltd.), and then pelletized by a pelletizer to obtain a thermoplastic resin composition. The MVR values of the thermoplastic resin compositions are shown in Table 3. It should be noted that a blank column in Table 3 indicates that the corresponding component is not blended.

A test piece (molded article) was produced using the obtained pelletized thermoplastic resin composition. The Charpy impact strength (-20°C) and the color developability of the obtained molded article were evaluated. The results are shown in Table 3.

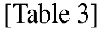

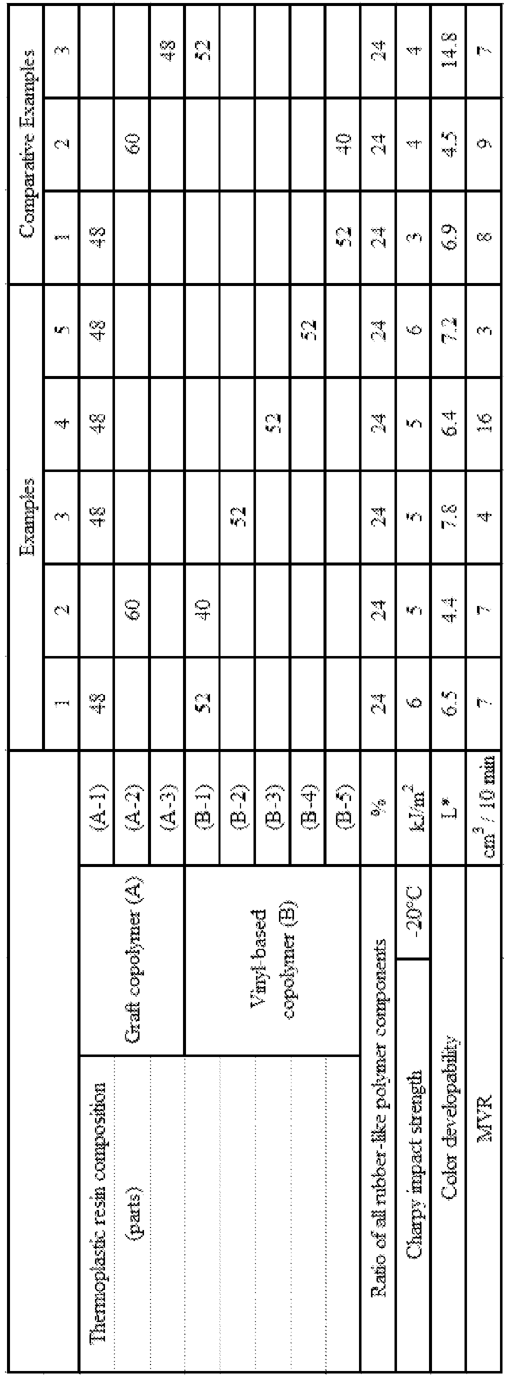

The thermoplastic resin compositions of Examples 1 to 5 exhibited favorable fluidity. In addition, the molded articles obtained by molding these thermoplastic resin compositions exhibited excellent impact resistance in a low temperature environment and excellent color developability.

On the other hand, in the thermoplastic resin compositions of Comparative Examples 1 and 2, since the vinyl cyanide-based monomer ratios of the vinyl-based copolymers (B) were less than 31% by mass, the obtained molded articles were inferior in impact resistance in a low temperature environment.

In the thermoplastic resin composition of Comparative Example 3, since the rubber-like polymer (a) had a volume average particle size of more than 250 nm, the obtained molded article was inferior in color developability.

### [Industrial Applicability]

The molded article using the thermoplastic resin composition of the present invention is useful as an automotive exterior part, an automotive interior part, office automation (OA) equipment, a home appliance part, or the like, and is particularly useful as an automotive exterior part.

## Claims

1. A thermoplastic resin composition comprising:
a graft copolymer (A) obtained by polymerizing a vinyl-based monomer mixture (m1) composed of one or more types of vinyl-based monomers, in the presence of a rubber-like polymer (a) having a volume average particle size of 80 to 250 nm; and
a vinyl-based copolymer (B) composed of 31 to 50% by mass of a vinyl cyanide-based monomer unit, 50 to 69% by mass of an aromatic vinyl-based monomer unit, and 0 to 30% by mass of another vinyl-based monomer unit,
wherein proportions of said graft copolymer (A) and said vinyl-based copolymer (B) are 30 to 70% by mass and 30 to 70% by mass, respectively, with respect to a total of 100% by mass of said graft copolymer (A) and said vinyl-based copolymer (B).

2. The thermoplastic resin composition according to Claim 1,
wherein said vinyl-based copolymer (B) is composed of 31 to 43% by mass of said vinyl cyanide-based monomer unit, 57 to 69% by mass of said aromatic vinyl-based monomer unit, and 0 to 30% by mass of said another vinyl-based monomer unit.

3. The thermoplastic resin composition according to Claim 1 or 2, wherein said vinyl-based copolymer (B) has a weight average molecular weight of 80,000 to 120,000.

4. The thermoplastic resin composition according to any one of Claims 1 to 3, wherein a proportion of all rubber-like polymer components contained in said thermoplastic resin composition with respect to a total mass of said thermoplastic resin composition is from 15 to 35% by mass.

5. A molded article using the thermoplastic resin composition according to any one of Claims 1 to 4.
